Europäisches Patentamt

European Patent Office

Office européen des brevets

(19)

(11) Publication number: **0 302 634**
**A2**

## (12) EUROPEAN PATENT APPLICATION

(21) Application number: 88306735.7

(22) Date of filing: 22.07.88

(51) Int. Cl.⁴ **B66F 9/18 , B60D 1/00 ,**
**B60P 1/64 , B62D 53/12 ,**
**B62D 49/00**

(30) Priority: 03.08.87 FI 873361

(43) Date of publication of application:
**08.02.89 Bulletin 89/06**

(84) Designated Contracting States:
**CH DE GB IT LI NL SE**

(71) Applicant: **OY ELECTROLUX AB**
**Teollisuuskatu 1 B**
**SF-00550 Helsinki(FI)**

(72) Inventor: **Mäkinen, Jorma**
**Raudunkuja 6**
**SF-36200 Kangasala(FI)**

(74) Representative: **Barlow, Roy James et al**
**J.A.KEMP & CO. 14, South Square Gray's Inn**
**London WC1R 5EU(GB)**

(54) **A combination of a loading trailer and a coupling mechanism, used together with a traction engine.**

(57) The invention relates to a combination of a loading trailer (1) and a coupling mechanism (2), which is used together with a traction engine (3). In known loading trailers the wheel axle is lifted, lowered and turned by power obtained from the traction engine, which requires connecting the cables and hoses of the traction engine and the loading trailer. In order to do this, the driver of the traction engine must get out of the traction engine for each coupling and uncoupling, which takes approximately 2-3 min and is, furthermore, unpleasant owing to leakage oil present in the hydraulic connectors.

This manual coupling and uncoupling is eliminated by the combination of a loading trailer and a coupling mechanism according to the invention. This has been made possible by equipping the loading trailer (1) with a power unit of its own, the steering hoses of which have been directed to a support bar (7) fitted in the coupling mechanism (2) which has been permanently articulated to the loading trailer. For the lifting, transferring and lowering of the combination of a loading trailer and a coupling mechanism, the prongs of the forklift truck (3) serving as the traction engine are driven into pockets in the coupling mechanism, in which the prongs are locked automatically by a latch device, when the coupling

mechanism is lifted off the ground. The preparations further in clude the lifting of a keyboard (9) suspended at the end of a hose (8) from the support bar (7), within the reach of the driver of the traction engine, into the truck cabin, and thus the truck is ready to carry out lifting, transferring and lowering of the loading trailer.

Fig. 1

## A combination of a loading trailer and a coupling mechanism, used together with a traction engine

The invention relates to a combination of a loading trailer and a coupling mechanism, used together with a traction engine. The combination is defined in greater detail in the preamble of Claim 1.

The object of the invention is to facilitate and speed up the use of a loading trailer in its loading, unloading and transferring functions.

The present-day loading trailer is an oblong trailer which has at one end a wheel axle which can be raised, lowered and turned, and the other end of the trailer is designed to be coupled to the front end of a traction engine. The traction engine and the rear end of the loading trailer have compatible coupling devices. By the functions of the traction engine the raising and lowering movements of the rear end of the loading trailer are effected so that the front end movements produced by the wheel axle and the rear end movements produced by the traction engine correspond to each other. The steering of the wheel axle from the power engine of the traction engine presupposes the coupling of the cables and hoses of the traction engine and the loading trailer. This means that, in the coupling and uncoupling situations of the traction engine and the loading trailer, the driver must get out of the traction engine to carry out the coupling. This is an additional operation, which takes approximately 2-3 min and which, furthermore, is unpleasant work owing to the leakage oil present in the hydraulic connectors.

In efficient traction engine - loading trailer work it is important that the traction engine can be uncoupled quickly for normal use of the traction engine, even for a small job. With the present-day arrangement, in which the uncoupling and the coupling take approximately 2-3 min each and are experienced as unpleasant, work efficiency suffers considerably.

This disadvantage is eliminated by the system according to the invention, in which the separate coupling and respectively uncoupling of the cables and hoses has been eliminated. The coupling of the traction engine to the loading trailer, as well as its uncoupling from it, is effected by merely driving them together.

This has been implemented by giving the combination of a loading trailer and a coupling mechanism according to the invention the characteristics of Claim 1.

According to the invention, the loading trailer is thus provided with its own power unit by means of which the movements of the wheel axle are effected. The steering hoses of the power engine are directed to a support device fitted in the coupling mechanism to be coupled to the loading trailer, and further to a steering keyboard within reach from the traction engine, at the end of a flexible hose. The coupling mechanism constitutes a separate structure which has, on the one hand, coupling means which couple to the coupling means of the traction engine and, on the other hand, means which produce an articulated connection between the loading trailer and the coupling mechanism. The coupling piece is permanently coupled to the loading trailer. When the loading trailer is to be transferred, the driver of the traction engine will drive his traction engine, which is in general a forklift truck, right up against the coupling mechanism and takes the keyboard, suspended from the support device, into the cabin, whereafter the work can start.

The connection between the loading trailer and the coupling mechanism is preferably made up of a simple hook and loop arrangement. which enables the loading trailer to turn in relation to the coupling mechanism fixed rigidly to the forklift truck.

The coupling mechanism has advantageously pockets, known per se, for receiving the forklift prongs. As soon as the coupling mechanism, lifted ; the forklift, is off the ground, a spring-actuated locking latch in the coupling mechanism locks the prongs of the forklift in these pockets.

The wheel axle of the loading trailer can advantageously be equipped with two pairs of wheels and a bogie structure.

The power engine of the loading trailer is advantageously a battery-operated power unit, from which the steering cylinders receive their driving power in a known manner.

A preferred embodiment of the invention is described below with reference to the accompanying figures, in which

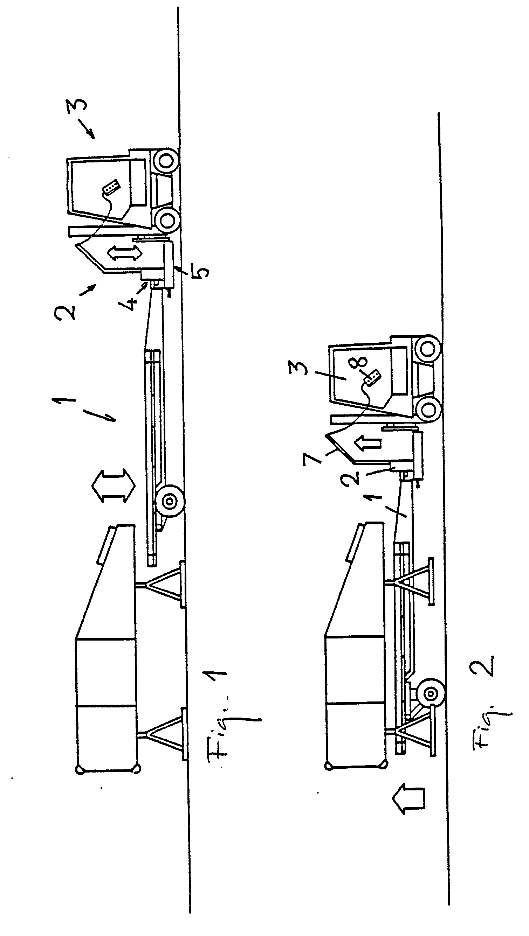

Figure 1 depicts a combination of a loading trailer and a coupling mechanism, coupled to a forklift truck and in a position lifted off the ground, driven partly beneath a load,

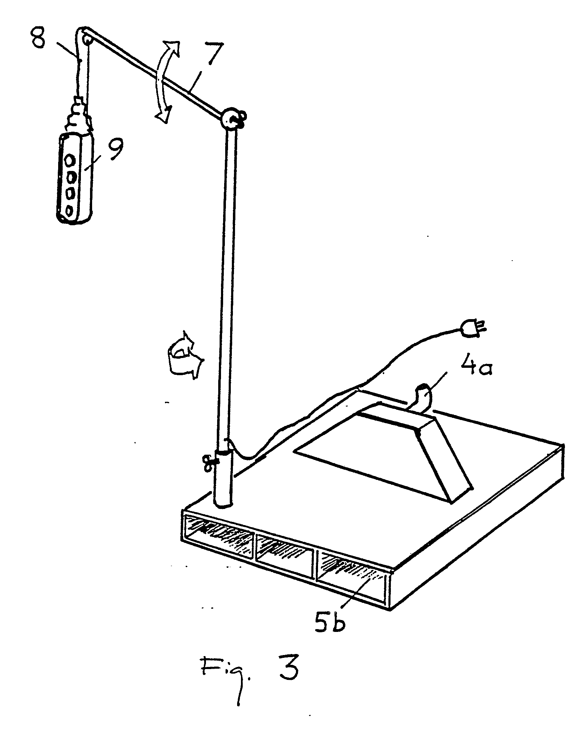

Figure 2 depicts the same as Figure 1, but with the loading trailer driven beneath the load and in the position supporting the load,

Figure 3 depicts an enlarged perspective representation of the coupling piece, equipped with a support bar for the steering hoses,

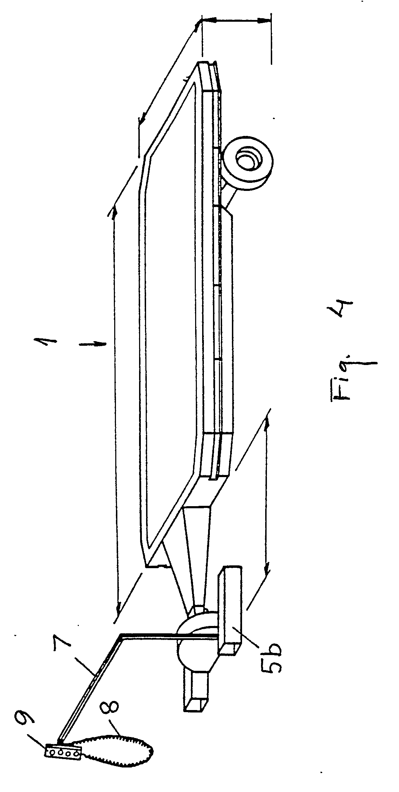

Figure 4 depicts a slightly enlarged perspective representation of the combination of a loading trailer and a coupling mechanism, the coupling mechanism being in accordance with another preferred embodiment,

Figure 5 depicts a perspective representation of a coupling mechanism equipped with a locking latch, the coupling mechanism being in the main in accordance with Figure 3,

Figure 6 depicts a partial section along line VI-VI in

Figure 5, and

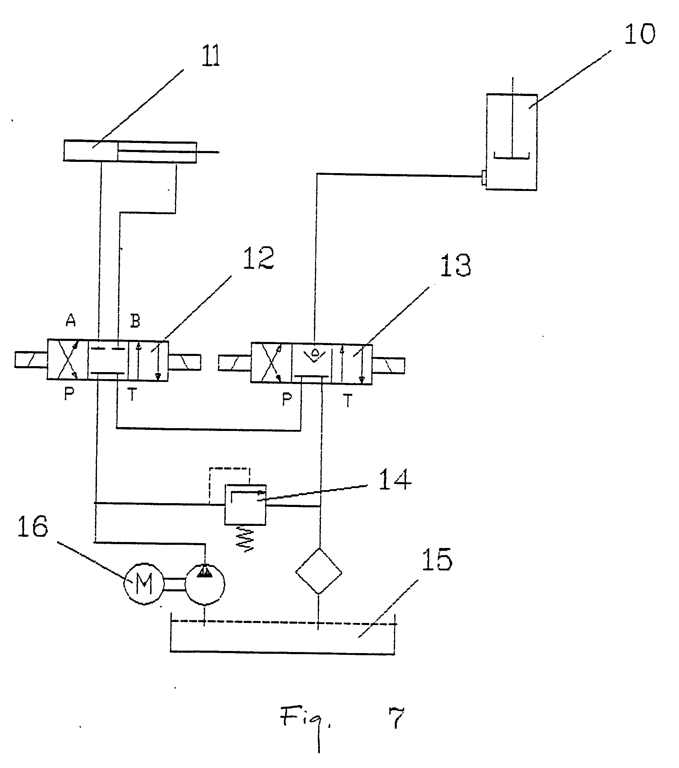

Figure 7 depicts a block diagram of the power engine of the loading trailer.

In the figures the corresponding parts are indicated by the same reference numerals. The loading trailer is indicated by numeral 1, the coupling mechanism by numeral 2, and the forklift truck by numeral 3. The hook and loop joint between the loading trailer and the forklift truck is indicated by 4 and the prong and pocket joint between the forklift truck and the coupling mechanism by 5. The hook of the joint 4 is indicated by 4a and its loop by 4b, and the fork prongs of the joint 5 by 5a and its pockets by 5b.

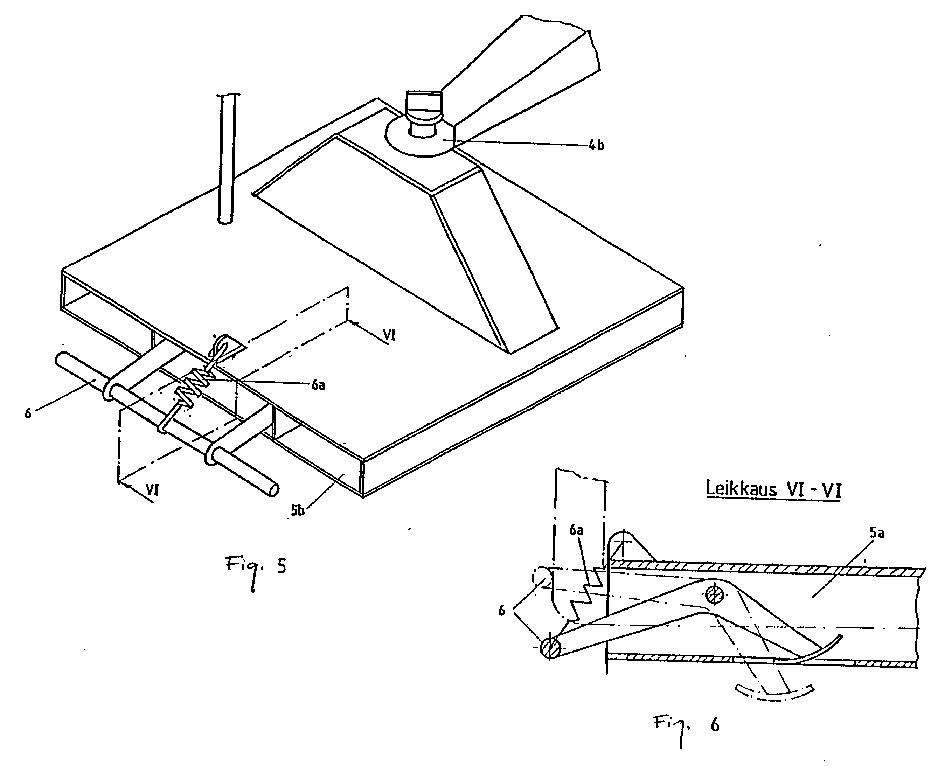

The coupling mechanism latch depicted in Figures 5 and 6 is indicated by numeral 6 and the tension spring acting on it by 6a. The support bar of the coupling mechanism is indicated by 7. The hose projecting from the end of the support bar is indicated by 8 and the steering keyboard at the end of the hose by 9.

In the power unit diagram depicted in Figure 7, the lifting cylinder is indicated by numeral 10, the turning cylinder by 11, the two direction valves by 12 and 13, the pressure limiting valve by 14, the oil reservoir by 15, and the power unit by 16.

When the loading trailer 1 is stationary, either empty or loaded, the coupling mechanism 2 is permanently coupled to it and the combination formed by them is ready to be coupled to the forklift truck 3 and to be transferred to its designated place. The coupling of the forklift truck to the coupling mechanism 2 is effected simply by driving the prongs 5a of the forklift truck into the pockets 5b of the coupling mechanism. Figures 5 and 6 show that, when the coupling mechanism is resting on the ground, the outer end of the latch 6 leans against the ground, while its inner end is flush with the lower surface of the pocket 5b. At this time the fork prongs can penetrate inside the pockets without being prevented by the latch 6 from doing so. As soon as the forklift truck lifts the coupling mechanism somewhat off the ground, the spring 7 pulls the latch into the upper position, in which it locks the fork prongs in the pockets (shown hatched in Figure 6). As long as the coupling piece remains off the ground, the fork prongs remain locked to the coupling piece and the forklift truck is able to transfer, turn and lift the loading trailer. Before steering the loading trailer the driver lifts the steering keyboard 9 suspended from the support bar 7 of the coupling mechanism into the cabin, from which keyboard the driver can steer the movements of the wheel axle of the loading trailer. The support bar 7 can be adjusted so that the keyboard or key box suspended from it is within the driver's reach.

The combination of a loading trailer and a coupling mechanism is thus usable as soon as the driver has driven his truck right up against the coupling mechanism. No manual coupling is required.

When the necessary work has been carried out with the combination of a loading trailer and a coupling mechanism, the forklift truck is uncoupled from the coupling mechanism, which takes place simply by lowering the pockets 5b against the ground, whereupon the outer end of the latch turns against the ground and releases the locking of the fork prongs. The key box is returned to its support bar and the forklift truck can be backed away from the coupling mechanism and is thus immediately free to carry out other work.

The power unit 16 fitted in the loading trailer and shown only diagrammatically in the figures, together with its cylinders, valves and hoses, is of a conventional construction is not within the scope of the present invention.


**Claims**

1. A combination of a loading trailer and a coupling mechanism, used together with a traction engine, comprising a loading trailer (1) the front end of which has a wheel axle which can be raised, lowered and turned and the rear end of which is designed to be coupled to the traction engine (3), which lifts and lowers this rear end and transfers the loading trailer from one place to another, **characterized in** that the loading trailer (1) has a power unit by means of which the movements of the wheel axle are effected, that there is a separate coupling mechanism (2) fitted to be articulated permanently to the rear end of the loading trailer, to which coupling mechanism the traction engine (3), preferably a forklift truck, is in turn fitted to be coupled in a lockable manner, and that the steering hoses of the power engine of the loading trailer are directed via a support device (7) fitted in the coupling mechanism (2) to a steering keyboard (9) within the reach of the traction engine driver.

2. A combination according to Claim 1, **characterized in** that the loading trailer (1) is coupled to the coupling mechanism (2) by means of a hook and loop arrangement (4a and 4b).

3. A combination according to Claim 1 or 2, **characterized in** that the coupling mechanism (2) has pockets (5b), known per se, for receiving the prongs (5a) of the forklift truck, and that a locking latch (6) locks the forklift prongs in these pockets when the coupling mechanism, lifted by the forklift truck, is off the ground.

4. A combination according to any of Claims 1-3, **characterized in** that the wheel axle of the loading trailer (1) is bogie structured.

5. A combination according to any of Claims 1-4, **characterized in** that the support device for the steering hoses is an adjustable support bar (7).

6. A combination according to Claim 5, **characterized in** that the steering keyboard (9) is fitted at the end of a hose (8) extending from the support bar (7).

7. A loading trailer (1) for implementing the combination according to any of Claims 1-6 and comprising at the front end of the trailer a wheel axle which can be raised, lowered and turned, **characterized in** that the trailer has a power engine for effecting the said movements of the wheel axle, and that at the rear end of the trailer there is a device (4) for articulating the trailer to the coupling mechanism.

8. A coupling mechanism (2) for implementing the combination according to any of Claims 1-6, **characterized in** that it comprises pockets (5b) for receiving the lifting and lowering forklift prongs (5a), a latch device (6a, 6b) for locking the prongs in the pockets when the coupling mechanism (2) is lifted off the ground, and a support device (7) for directing the steering hoses of the loading trailer (1), according to Claim 6, to be coupled to the coupling mechanism, to a steering keyboard (9) which is fitted at the end of a flexible hose (8) extending from the support device.

Fig. 1

Fig. 2

Fig. 3

Fig. 4

Leikkaus VI - VI

Fig. 6

Fig. 5

Fig. 7